# EUROPEAN PATENT SPECIFICATION

(11) **EP 2 558 901 B1**
(45) Date of publication and mention of the grant of the patent: **05.06.2019**
(21) Application number: 11716082.0
(22) Date of filing: 14.04.2011
(51) Int. Cl.: G02B 26/08

(54) **DEFORMABLE MIRROR DEVICE WITH REPLACEABLE MIRROR SHEET AND METHOD TO ADHERE A MIRROR SHEET**
Verformbare Spiegelvorrichtung mit austauschbarer Spiegelfolie und Verfahren zum Kleben einer Spiegelfolie
Dispositif de miroir déformable doté d'une feuille miroir amovible et procédé d'adhésion d'une feuille de miroir

(30) Priority: 14.04.2010 EP 10159898
(43) Date of publication of application: 20.02.2013
(73) Proprietor: Nederlandse Organisatie voor toegepast- natuurwetenschappelijk onderzoek TNO, 2595 DA 's-Gravenhage (NL)
(72) Inventor: NIJENHUIS, Jan, Roelof, NL-2625 LM Delft (NL); HAMELINCK, Roger, Franciscus, Mattheus, Maria, NL-5104 HJ Dongen (NL); VAN ELP, Jan, 2613 BM Delft (NL)
(74) Representative: V.O.
(86) International application number: PCT/NL2011/050251
(87) International publication number: WO 2011/129694

(56) References cited:
- EP-A2- 1 887 409
- US-A- 5 414 564
- US-A- 5 719 846
- US-A1- 2003 214 734

## Description

### Field of the invention

The invention relates to a deformable mirror device. In one aspect it relates to a deformable mirror device comprising a reflective layer for reflecting electromagnetic radiation, an actuator for deforming the reflective layer essentially perpendicular to its surface, and a base for supporting the actuator.

The invention also relates to a method to adhere a deformable mirror sheet to an actuator.

### State of the art

Deformable or membrane mirrors are mirrors made out of a thin reflective layer material, such as metalized plastic foil, coated glass, a metallic foil or any other sheet material. Typically such layers have a thickness in the order of tens of microns up to a few millimetres to allow a deformation in a direction perpendicular to the mirror surface. Membrane mirrors can be used as components in for instance adaptive optics systems. Adaptive optics is used to improve the performance of optical systems like astronomical telescopes and optical projection systems for use in for instance photolithography. More in particular adaptive optics are used to correct for the aberration of the light in the atmosphere or to correct non-uniformities in projection systems, resulting in better images. In adaptive optics the distortion in a wave front is measured and subsequently compensated with a spatial phase modulator like a deformable mirror.

In the course of time the membrane, more in particular the reflective metallic layer may degrade due to for instance radiation, weather influences, or ageing processes. The membrane may also be damaged, for instance broken, cracked or torn. Such a degradation or damage requires replacement of the complete adaptive system, a replacement of the mirror, or repair of the membrane. In both latter cases, the membrane has to be removed from the system.

Membrane mirrors comprise actuators that are fixed at one side to a solid structure and at the other side to the membrane. The thicker the membrane, the larger the power required to deform the membrane and the more heat is generated. The heat dissipation introduces unwanted deformation of the mirror which has to be compensated. It will be evident that it is a goal of engineers developing deformable mirrors to reduce the thickness of the membranes.

Removal of the membrane, if possible at all, is a delicate job due to the fragility of both the membrane and the actuators. For this reason repairing membrane mirrors according to the state of the art is very time consuming and expensive.

European patent application EP 0 744 641 discloses a deformable mirror comprising an actuator. In this known mirror the two opposite extremities of the rod shaped actuators are bonded with an adhesive to the membrane and the base, respectively. A disadvantage of this known deformable mirror is that the reflective membrane, the actuator, and the base effectively constitute a single body, making it impossible to replace only the mirror.

International patent application WO 2005/050283 also discloses a deformable mirror comprising an actuator. The deformable membrane of this known deformable mirror comprises a reflective foil and an actuation membrane that are connected to each other with rod shaped actuating connections, which connections are glued at the opposite extremities to the reflective foil and the actuation membrane, respectively. A disadvantage of this known deformable mirror is that the reflective membrane and the actuator constitute a single body, again making it impossible to replace only the mirror.

United States patent US 4,940,318 discloses a deformable mirror comprising a replaceable actuator. The deformable membrane of this known deformable mirror comprises a reflective face sheet that is bond by an epoxy cement or a frit bond to a retraction membrane for retracting the face sheet. The retraction membrane in its turn is fixed to the base by an epoxy cement or a frit bond. A disadvantage of this known deformable mirror is that only the actuator can be removed, not the reflective membrane that constitutes a single body with the base of the mirror.

US 5,719,846 discloses a deformable mirror that uses electrodes to clamp the mirror surface against an uneven substrate. US 5,719,846 discloses a deformable mirror that uses electrodes to bend a mirror locally over pits in a deformable disk.

### Summary

It is an objective to provide a deformable mirror device comprising a reflective layer that can easily be removed for replacement or repair.

According to one aspect a deformable mirror device according to the preamble is provided, wherein a first electrode is coupled to the actuator and a second electrode, which first and second electrodes are electrically isolated arranged relative to each other.

An advantage of two electrodes that are electrically isolated and arranged to each other is, that the electrodes allow to provide an attraction force by simply applying a voltage difference to said electrodes. The device has both an actuator for deforming the reflective layer and electrodes that provide for an additional electric field to apply an attraction force that clamps the reflective layer to the device. Thus, the reflective layer is coupled to the actuator via the intermediate of the first and second electrode and the electric field region between these electrodes.

In an embodiment the actuator is configured to transmit deformations to the first electrode and from there to the reflective layer via the second electrode The actuator may have a plurality of movable elements, that are driven actuation signals and that are coupled to the first electrode, so that motion of at least one of the elements is transmitted to the first electrode where the first electrode is coupled to the movable element.

Application of a voltage between the first and second electrode results in one or more electric fields in an electric field region between the first and second electrode. In an embodiment the actuator is coupled to the reflective layer via the electric field region. The actuator may have a plurality of movable elements, that are driven actuation signals and that are each coupled to the reflective layer via the electric field region.

An effect of applying a voltage difference between a first electrode and a second electrode that is electrically isolated from the first electrode is, that opposite charges will be build up at the electrodes. As a consequence there will be an attraction force between the two electrodes, which attaches the two electrode structures to each other. The actual force will depend on geometry and material properties like for example the polarizability of the dielectric material. If the dielectric material is not a perfect isolator but a material with a low specific resistivity, for example between 1*10⁸ Ohm*cm en 1*10¹⁵ Ohm*cm, than a small current will flow through the dielectric material. The electrical charges will move towards the interface between dielectric material and the electrodes, thus increasing the electrostatic force. The electrostatic force will be at the interface of the dielectric material and the electrode. In the literature this is known as Johnson-Rahbeck clamping. As almost all isolating materials used in practice, for example most glasses and plastics, have a specific resistivity comparable to the above mentioned values, this type of attraction force may be dominant in practical situations. For materials that have a specific resistivity above 10^16 Ohm*cm, like for example SiO2 and ultra low expansion glass (ULE), the attraction force may be based on a pure electrostatic attraction between the conductors. A Johnson-Rahbeck effect may not occur because of the extreme long time scale in which the charges move through the dielectric material.

Because the first electrode is coupled to the actuator, it is possible to provide an attraction force between a replaceable or removable mirror sheet comprising the reflective layer and the other parts of the mirror device, like the actuators and the base. An effect of switching off the voltage, short circuiting or grounding the electrodes, is that the charges will flow away and the attraction electrostatic force between the mirror sheet comprising the reflective layer and the other parts of the mirror device will disappear.

The above mentioned objective is obtained with this effect because the adhesion between the replaceable mirror sheet comprising the reflective layer and the actuator can be switched on and off electrically by building up electrostatic charges or by removing these charges. Consequently, the reflective layer can easily be removed from the deformable mirror device and replaced.

Another objective is to provide a method for an easy removal of a reflective layer of a deformable mirror.

This objective is obtained with a method wherein a voltage is applied to provide an electrostatic adhesion force between the deformable mirror sheet and the actuator.

An effect of using an electrostatic force for adhesion is that there is no need for using a glue, cement or other chemical adhesion material, or any mechanical fixing by for instance screwing.

The above mentioned object is obtained by this effect because the adhesion force can easily be removed by electrical means, for instance by switching off the voltage. There is no need for using solvents or mechanical means that might damage the mirror during removal of the mirror sheet.

According to one aspect a mirror sheet for use in a deformable mirror device is provided, for example for a deformable mirror device according to any one of claims 1-11, the mirror sheet comprising a reflective layer and a supporting layer, which supporting layer comprises a protrusion or recess.

### Brief description of the figures

- Figure 1: shows an example of a deformable mirror device according to the state of the art.
- Figure 2: shows a schematic illustration of a deformable mirror device with the mirror sheet attached to the actuator.
- Figure 3: shows a schematic illustration of a deformable mirror device and two ways of removing the mirror sheet from the other parts of the device.
- Figure 4: schematically illustrates some embodiments of a mirror sheet.
- Figure 5: shows schematically some embodiments of the functional layer structure comprising the mirror sheet, the isolating layer and the actuator electrode.
- Figure 6: illustrates a bi-polar and a multi-polar electrode geometry
- Figure 7: shows embodiments of the functional layer structure having a specific geometrical shape
- Figure 8: schematically shows a deformable mirror with a predefined, non-flat geometry.
- Figure 9: schematically shows a deformable mirror with a segmented functional layer.
- Figure 10: shows an embodiment of an electrical circuit that can be used in the method to mount and remove the mirror sheet.

### Detailed description of exemplary embodiments

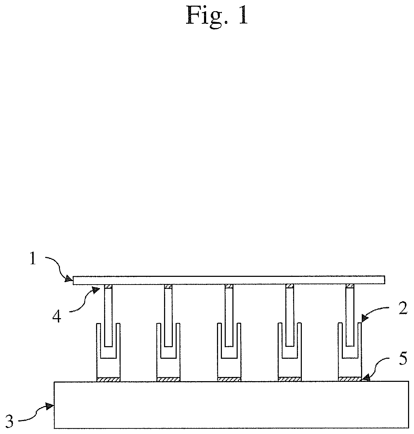

Figure 1 shows an example of a deformable mirror according to the state of the art comprising a reflective layer (1) for reflecting electromagnetic radiation, an actuator (2) for deforming the reflective layer essentially perpendicularly to its surface, and a base (3) for supporting the actuator. The actuator is fixed at one end to the reflective layer (1) for instance by an adhesive (4) and at the other end to the base (3), for instance by a glue (5) or by mechanical means like screwing.

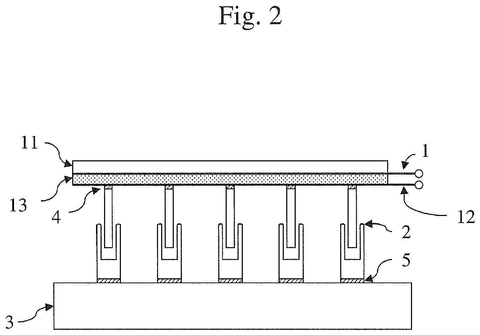

Figure 2 shows a schematic illustration of an embodiment of a deformable mirror device. In this embodiment, the reflective layer (1) of the mirror sheet (11) is also an electrode for applying a voltage. An advantage of this embodiment is, that no additional electrode has to be applied to the mirror sheet. The mirror device further comprises a second electrode (12) that is glued (4) or otherwise coupled to the actuator (2). An electrically isolating layer (13) is situated between the two electrodes (11,12) to allow charges to be build up at both electrodes. This isolating layer may be fixed to either the mirror sheet (11) or to the first electrode (12). If the isolating layer is fixed to the first electrode, the isolating layer may be a release layer that allows easy release of the mirror sheet. However, the isolating layer may also be a loose isolating foil or film. When a voltage difference is applied, the electrodes, and consequently also the mirror sheet and the actuators are attracted to each other by an electrostatic force, fixing the mirror sheet to the actuator. Because the mirror sheet is attached to the actuators, the mirror sheet comprising the reflective layer will deform when the actuators, that are fixed (5) to a stiff supporting structure (3), are actuated to pull or push at the mirror sheet.

The actuator (2) has a plurality of movable elements that are driven actuation signals. The movable elements may comprise magnets for example, which are driven by a magnetic field, or electrodes driven by electric fields.
The movable elements are coupled to the first electrode, so that motion of at least one of the elements is transmitted to the first electrode where the first electrode is coupled to the movable element.

Application of a voltage between the first and second electrode (11, 12) results in one or more electric fields in an electric field region between the first and second electrode (11, 12), which clamps the mirror sheet against the actuator and the first and second electrode against the isolation between these electrodes (11, 12). In an embodiment the actuator is coupled to the reflective layer via this electric field region. Thus if the movable elements are driven by a magnetic field, both magnetic fields and an electric field are used, the first and second electrode (11,12) transmitting the deformation generated by the moveable elements. If the movable elements are driven by electric fields a first field region between the first and second electrode 11, 12 and a plurality of distinct further field regions in the actuator are used the first and second electrode (11,12) transmitting the deformation generated by the further electric fields.

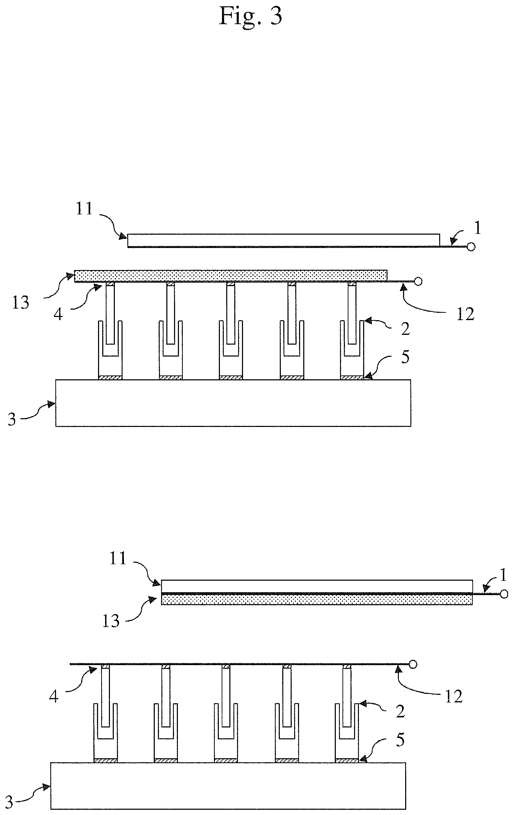

Figure 3 illustrates two ways how a mirror sheet according to the embodiment shown in figure 2 can be removed from the other parts of the mirror device. The so-called clamping interface can be either between the isolating layer (13) and the reflective layer and electrode (1) as shown in the upper part of the figure, or it can be between the isolating layer (13) and the first electrode (12). In other words, the isolating layer can be fixed either to the reflective layer or to the support electrode (12).

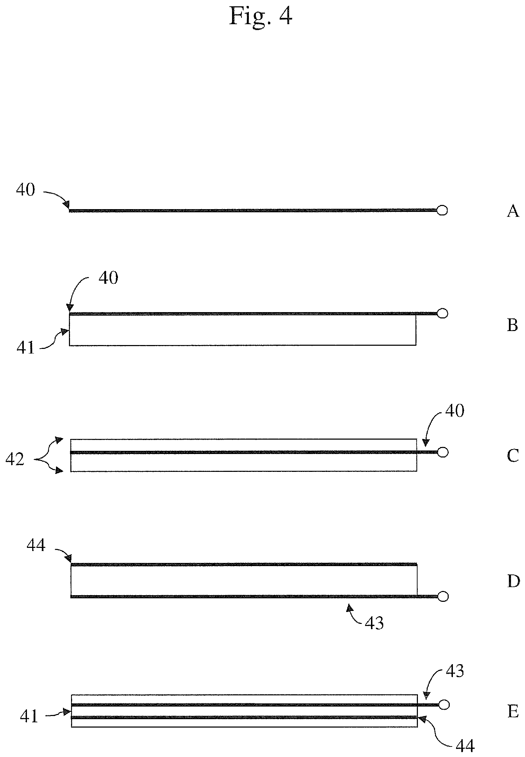

Figure 4 shows some embodiments of a mirror sheet suitable for a deformable mirror device. In the case that the reflective layer is electrically conductive as will be the case for metallic layers, it is preferred that the reflective layer is also used as an electrode. This conductive reflective layer (40) may be a freestanding foil as shown by (A), the layer (40) may be attached to or coated on a supporting foil (41) as shown by (B) or the layer (40) may be embedded in a supporting foil (42) as shown by (C). However, also an additional electrically conductive layer or other electrode geometry can be applied, for instance if the conductivity of the metallic layer is insufficient. Such an additional electrode preferably is placed behind the reflective layer as seen from the source of the incident electromagnetic radiation. However if the additional electrode is placed between the reflective layer and the source of radiation, it is preferably transparent for the electromagnetic radiation. The electrode (43) or the reflective layer (44) or both may be attached to or coated on a supporting layer (41) as shown by (D). The reflective layer or the electrode may face the source of the incident electromagnetic radiation. However, it is understood that if the reflective layer is placed behind the electrode as seen from the source of radiation, the electrode should be transparent for the radiation. For instance indium tin oxide electrodes can be applied when the radiation is visible light. One of the two layers (43, 44) or both may also be embedded in a supporting foil (41) as shown by (E). An advantage of embedding the reflective layer and the electrode in the foil is that such a construction makes them less prone to degradation. For this reason, such a geometry may be preferred, in particular in a harsh environment.

The mirror sheet might be reflective for all types of electromagnetic radiation. The deformable mirror device is suited for radiation in a broad range of frequencies. In particular it is suited for reflecting electromagnetic radiation having a wavelength starting as low as one hundredth of a nanometre up to one millimetre. More in particular it is suited for astronomic wavelengths (ranging from tenths of micrometres to a few hundred micrometres) including visible to infrared wavelengths, for wavelengths that are used in photolithography, including ultraviolet lithography (ranging from ten nanometre to one micrometre), and for x-ray wavelengths (one hundredth to ten nanometre). Even more in particular the deformable mirror device is suited for lithographic applications at or around 193 nm (immersion), 13.5 nm (Extreme Ultraviolet), 0.8 nm (X-ray), 0.1 nm (deep X-ray).

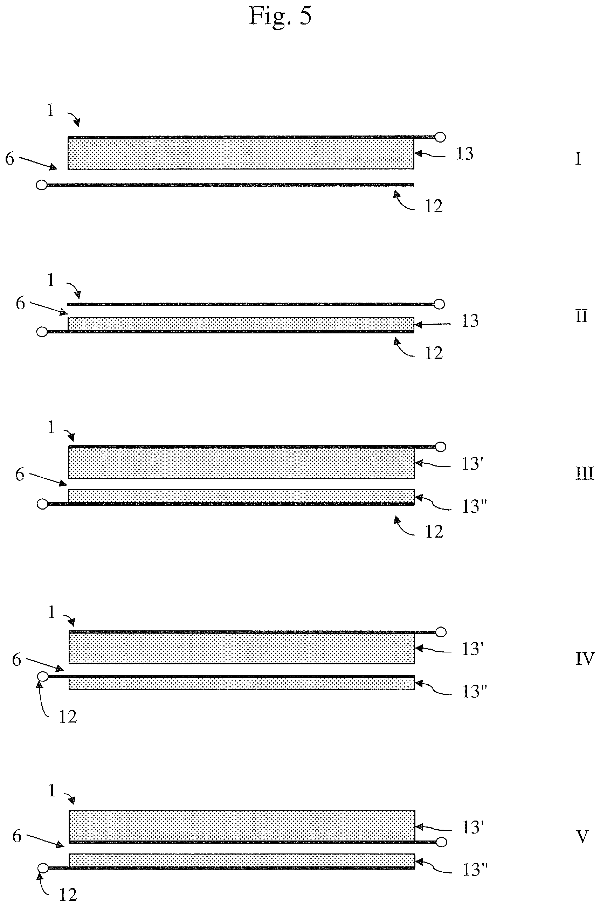

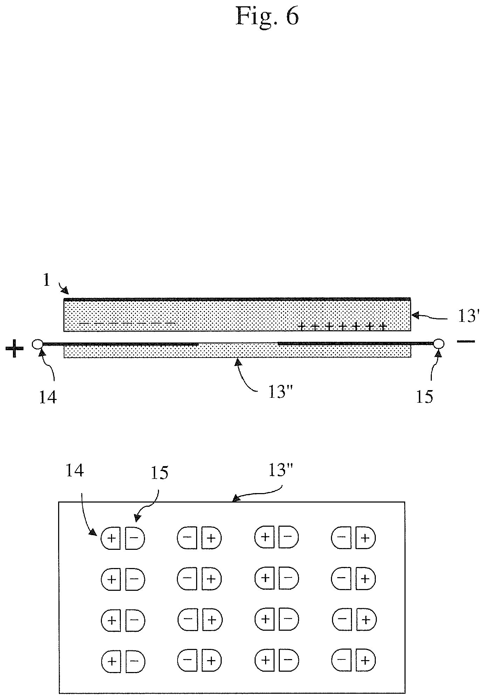

Figure 5 shows some of the embodiments of the functional layer structure comprising the mirror sheet, the actuator electrode and the isolating layer. The clamping interface, viz. the interface where the mirror sheet can be removed from the other parts of the mirror device, is illustrated by a gap (6). When the mirror sheet is attached to the device, there will be no substantial gap. In this figure the mirror sheet (1) is represented by a solid line. However, it is understood that the mirror sheet may comprise several layers, including the geometries that are shown in figure 4. In particular it should be mentioned that the reflective layer need not to be an electrode for all embodiments of the mirror device, as will be illustrated in figure 6. Basically, the same holds for the electrode (12) that is fixed to the actuator. This electrode might for instance be embedded in or attached to a supporting layer as shown in figure 4. In one embodiment (I), the isolating layer (13) is fixed to the mirror sheet (1). In another embodiment (II), the isolating layer is fixed to the electrode (12) that is attached to the actuator. In a third, forth and fifth embodiment (III, IV, V), both the mirror sheet (1) and the actuator electrode (12) are fixed to a supporting layer (13', 13"). Of course there must always be an isolating layer between the first electrode (12) and the electrode of the mirror sheet. The embodiments (IV) an (V) are preferred above embodiment (III) because in the first one there are less interfaces between the electrodes. At interfaces between the different layers, viz. electrodes and supporting layers, unwanted charging may occur, reducing the effective attraction force between the mirror sheet and the electrode (12).

The electrodes of the mirror sheet and the actuator electrodes need not to be continuous. A grid or any other geometry suitable for providing an electrical field between the electrodes may satisfy if a sufficient amount of charge can accumulate. More in particular the actuator electrode may for instance extend only along the contact area between the actuator and the adjacent deformable layer or it may extend essentially along the whole side of the isolating layer facing the actuators.

In figure 5, so-called mono-polar geometries are shown. In a mono-polar or conventional capacitor geometry, the dielectric material is sandwiched between two electrodes. The positive and negative charges at the electrodes that are separated by the electrically insulating or dielectric material in between result in the required attraction force. However, other electrode geometries are possible to obtain an attraction force between the mirror sheet and the actuator. In figure 6 a bi-polar geometry is shown for a functional layer structure similar to drawing (IV) of figure 5, viz. a structure comprising two supporting layers (13', 13"). In the embodiment of figure 6, however, the electrode of the mirror sheet (1) need not to make contact to a voltage supply. The two electrodes that are required for applying a positive (+) and a negative (-) voltage are placed next to each other on one of the supporting layers, in figure 6 being the supporting layer (13") situated in vicinity of the actuator. When a positive voltage is applied to one electrode (14) and a negative voltage to another electrode (15), than the charges in dielectric supporting layer (13') of the mirror sheet will readjust (indicated by - and + signs) resulting in an attraction force between each electrode and the supporting layer of the mirror sheet.

The bi-polar geometry can be configured into a multi-polar geometry. An embodiment of such a multi-polar electrode geometry is shown in the lower drawing of figure 6, being a schematic top view of a possible electrode geometry. A multi-polar geometry may be advantageous for good positioning of a mirror sheet because it allows that the sheet is fixed only locally, viz. at the position of specifically addressed electrodes. More in particular one may start with fixing the mirror sheet in the middle, allowing minor (rotational) correction when fixing the other parts. Preferably, the bi-polar or multi-polar electrodes will be configured in or on a support layer (13") that is fixed to the actuators. However, it is also possible to configure such an electrode geometry in or on the layer (13') supporting the reflective layer.

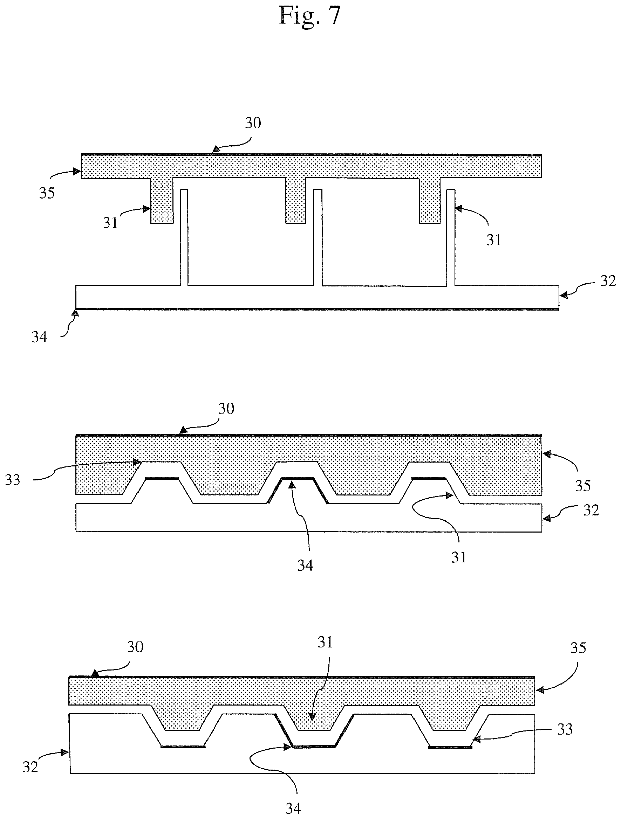

Basically, the shape of the functional layer structure is flat as is shown in the figures 5 and 6. However, specific structures may be preferred to obtain a better performance. To allow a better positioning of the mirror sheet and/or to allow a certain degree of lateral displacement or deformation, the mirror sheet (35) and/or the supporting layer (32) may comprise protrusions (31) or recesses (33) as shown in figure 7. The reflective layer (30) may be an electrode, but also other embodiments of the mirror sheet as for example shown in figure 4 may be used. The electrodes (34) may be structured, for example in a grid like structure or a bi-polar or a multi-polar geometry. Although two supporting layers (32, 35) are shown in figure 7, such layers may be omitted in an embodiment as indicated by (I) in the figures 4 and 5.

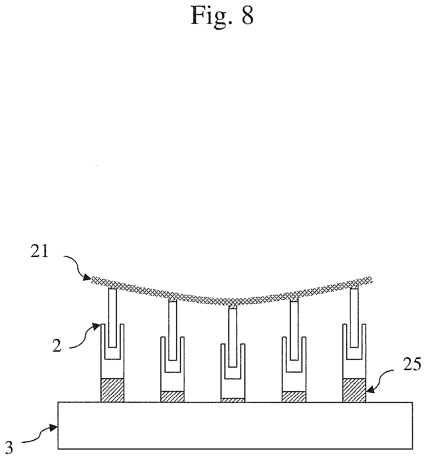

The deformable mirror may comprise many actuators to give the reflective layer any required shape. Such a shape can be spheric, aspheric, concave, convex, rotational symmetric or any freeform. The actuators may be arranged to obtain such shape starting from an essentially flat geometry as shown in figure 2, but the mirror sheet (21) may also have a pre-defined form as illustrated in figure 8. Such a pre-defined form of the mirror sheet, like for instance a parabolic form has the advantage that the actuators only have to realise small variations in the shape of the mirror sheet to obtain the required shape. A pre-defined form allows faster and more accurate adaption of the mirror sheet to the required form. The pre-defined form can for instance be realised by a supporting structure (3) having essentially a non-flat geometry or by using fixation structures (25) for the actuators (2) that can be adjusted and/or selected to obtain the required predefined form of the functional layer structure (21), or more particular the reflective layer of the mirror sheet.

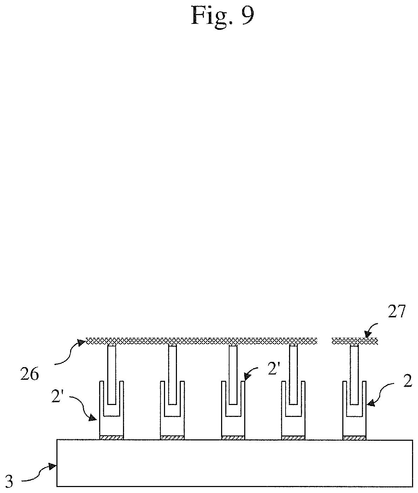

The deformable mirror device may comprise several segments (26, 27) of adjacent reflective mirror sheets as illustrated in figure 9. Each of the functional layer structures or mirror sheets might be curved, for example as is shown in figure 8, or flat. The segments of the mirror may all have the same shape or some or all may be differently shaped. The segments (26) may be actuated by a number of actuators (2') or a segment (27) may be actuated by only one actuator (2). In the situation where only one segment is attached to an actuator, this segment of the functional layer structure will not necessarily deform. However, it is understood that with deformation of the mirror is meant an adaption of the mirror sheet as a whole. Adaption means not only minor correction for aberrations or other optical disturbances but also directing the radiation in a defined direction, for instance for light projection purposes in for example a lithographic apparatus.

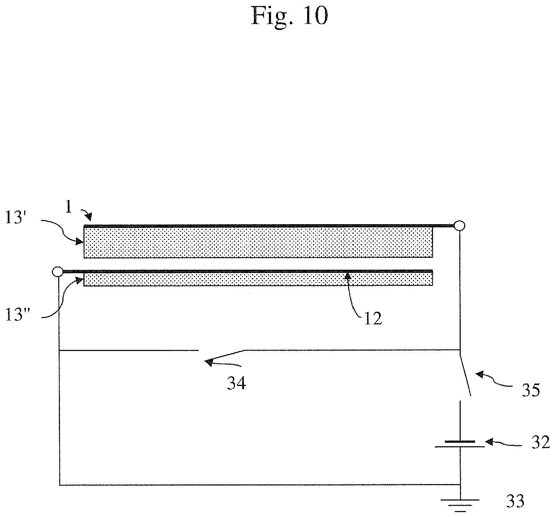

Figure 10 shows an embodiment of an electrical circuit that can be used to apply electrical charges to the mirror sheet (1) and the actuator electrodes (12). The circuit comprises a voltage supply (32) and a first on/off switch (35) for applying a voltage difference to the electrodes. Although a DC voltage may be preferred, it should be kept in mind that it is also possible to apply an alternating voltage. Depending on the electrical properties, in particular the conductivity, of the supporting layer or layers, an AC voltage can advantageously used in multi-polar geometry. It further comprises a second switch (34) for short circuiting the electrodes. When bringing into practise, it should of course be prevented that both switches are closed simultaneously. More in particular in this embodiment, the switch allows both electrodes to be connected to ground (33). Of course the supporting layer (13') should be isolating or the mirror sheet (1) should comprise an isolating layer to obtain an isolating layer between the electrodes. Here, a functional layer structure comprising two supporting layers (13', 13") is shown. However, as has been mentioned above, the functional layer is not limited to this embodiment.

After the mirror sheet is properly positioned on the actuators, a voltage can be applied, allowing opposite charges to accumulate at the electrodes. These charges will result in an attraction force fixing the mirror sheet to the actuators. The voltage that is needed depends on the properties, in particular the electrical properties of the materials used and the dimensions, in particular the thickness of the different layers. It might be possible that the voltage should be continuously supplied to maintain the fixation. However, in the case that the isolating layer is extremely well isolating, the voltage supply can be switched off. In specific cases it might even be possible to charge the mirror sheet and/or the actuator electrode in advance, for instance by corona charging, rubbing or any other method known to those skilled in the art. In such a situation, charging by a voltage supply can be omitted.

To remove the mirror sheet from the actuators, the electrodes might be short circuited and/or grounded. In practise, this may often not be needed due to the fact that the charges will disappear when the voltage is switched off because the materials used will not be perfect electrical isolating nor will they be polarised permanently.

The reflective layer and a possible supporting layer may have a high stiffness to minimise the deformation of the mirror sheet, in particular during handling, viz. placing on the actuators and during removal from the actuators. A high stiffness results in a well defined form of the reflective layer between each of the actuators, in particular when no release layer or a soft or flexible release layer like for instance a thin plastic foil is used. Such a plastic release layer might be a polyimide or a poly-thetra-fluor-ethene. A high stiffness can be obtained by selecting the proper material or by a thick layer. A stiff layer might be a thick metal foil or a metallic layer fixed to high quality glass like borosilicate or tempered soda lime glass or low expansion glass-ceramics or other ultra low expansion materials.

The release layer may also have a high stiffness. Such a stiff release layer avoids local unevenness caused by for instance the contact areas of the actuators. If the stiffness of the release layer is much higher than the mirror sheet, than the mirror sheet will adapt better to the smooth release layer.

It will depend on the particular circumstances and the particular use whether a stiff mirror sheet or a stiff release layer has to be preferred.

### Example

An embodiment of a deformable mirror is described here by way of nonlimiting example. This embodiment is in particular suited for turbulence correction. The mirror sheet comprises a 100 micron thick Pyrex (trademark of Corning) layer with a 50 nm thick aluminium coating. This coating combines the functions of reflective layer and electrode. On top of this 50 nm thick aluminium reflective coating a protective coating of MgO/SiO2 with a thickness of a few nanometres can be applied which is transparent for visible wavelengths. The actuator electrode layer comprises a 20 micron thick Kapton (trademark of DuPont) layer laminated with a copper electrode of a few millimetre thickness. This electrode layer is glued to actuator struts, for example electromagnetic actuators with a 6 millimetre spacing. Between the two electrodes a voltage of 500 to 100 Volt is applied to fix the mirror sheet to the actuator. For removing the mirror sheet from the actuators, the two electrodes are short circuited and earthed.

It is the function of the supporting structure to provide a reference and a platform for the actuators. So, the description of embodiments is not meant to excluded any type of structure suited to fulfil this function. Therefore, the supporting structure may have all kinds of shapes, may comprise different geometries and may be constructed out of all kind of materials.

A method to adhere a deformable mirror sheet to an actuator is provided, comprising providing a first electrode coupled to the actuator, providing a second electrode that is arranged to be electrically isolated from the first electrode, and applying a voltage difference between the electrodes to provide an electrostatic adhesion force between the deformable mirror sheet and the actuator;

## Claims

1. Deformable mirror device comprising
- a mirror sheet comprising a reflective layer (1) for reflecting electromagnetic radiation,
- an actuator (2) for deforming the reflective layer essentially perpendicular to its surface,
- a base (3) for supporting the actuator, and
- a first and second electrode (11, 12), the first electrode (11) being the reflective layer (1) or being coupled to the reflective layer (1), the second electrode being coupled to the actuator (2), the first and second electrodes (11, 12) being electrically isolated arranged relative to each other,
- an electrically isolating layer (13) situated between the reflective layer (1) and the second electrode (12);
**characterized in that**
the mirror sheet is a removable mirror sheet (11), fixed to the actuator by clamping due to an electrostatic force between the first and second electrode (12).

2. Deformable mirror device according to claim 1, wherein the actuator (2) is configured to transmit deformations to the second electrode (12) and from there to the reflective layer (1) via the first electrode (11).

3. Deformable mirror device according to claim 1 or 2, wherein the actuator (2) is coupled to the reflective layer via an electric field region between the first and second electrode (11, 12).

4. Deformable mirror device according to any one of the preceding claims, wherein the electrically isolating layer (13) is fixed to the reflective layer (1).

5. Deformable mirror device according to any one of claims 1-3, wherein the electrically isolating layer (13) is fixed to the second electrode (12).

6. Deformable mirror device according to any one of the preceding claims, wherein a support layer (13') is fixed to the reflective layer (1) and a second support layer (13") is fixed to the second electrode (12), wherein at least one of the layers (13',13") is electrically isolating.

7. Deformable mirror device according to any of the preceding claims wherein the first electrode (14) and the second electrode (15) are arranged to each other in a bi-polar or a multi-polar geometry.

8. Deformable mirror device according to claim 6 or 7, wherein the first support layer (13') has a higher mechanical stiffness than the second support layer (13").

9. Deformable mirror device according to claim 8, wherein the support layer (13') is a glass layer, preferably a borosilicate or tempered soda lime and the release layer (13") is a plastic layer, preferably a polyimide or a poly-thetra-fluor-ethene.

10. Deformable mirror device according to claim 9, wherein the support layer (13') has a thickness between 10 micron and 500 micron, preferably between 50 micron and 200 micron, and the release layer (13") has a thickness between 1 micron and 200 micron, preferably between 10 micron and 50 micron.

11. Deformable mirror system comprising a deformable mirror device according to any of the preceding claims, wherein the system comprises a voltage supply for applying a voltage to the electrodes.

12. Method of adhering a removable deformable mirror sheet temporarily to an actuator (2), wherein the mirror sheet comprises a reflective layer (1) comprising
- providing a first electrode (11) being the reflective layer,
- providing a second electrode (12) coupled to the actuator, the second electrode (12) being arranged to be electrically isolated from the first electrode (11),
- applying a voltage difference between the electrodes (11, 12) to provide an electrostatic adhesion force between the deformable mirror sheet and the actuator (2), whereby the removable deformable mirror sheet (11) is fixed to the actuator by the electrostatic adhesion force;
- transmitting deformations generated by the actuator (2) to the deformable mirror sheet via the first and second electrode (11, 12) while the electrostatic adhesion force remains applied between the deformable mirror sheet and the actuator (2).

## Patentansprüche

1. Verformbare Spiegelvorrichtung, umfassend:
- eine Spiegelfolie, die eine reflektierende Schicht (1) zum Reflektieren elektromagnetischer Strahlung umfasst,
- einen Aktor (2) zum Verformen der reflektierenden Schicht im Wesentlichen senkrecht zu ihrer Oberfläche,
- eine Basis (3) zum Tragen des Aktors, und
- eine erste und zweite Elektrode (11, 12), wobei die erste Elektrode (11) die reflektierende Schicht (1) ist oder mit der reflektierenden Schicht (1) gekoppelt ist, wobei die zweite Elektrode mit dem Aktor (2) gekoppelt ist, wobei die erste und die zweite Elektrode (11, 12) elektrisch isoliert im Verhältnis zueinander angeordnet sind,
- eine elektrisch isolierende Schicht (13), die sich zwischen der reflektierenden Schicht (1) und der zweiten Elektrode (12) befindet;
**dadurch gekennzeichnet, dass**
die Spiegelfolie eine entfernbare Spiegelfolie (11) ist, die an dem Aktor durch Festklemmen aufgrund einer elektrostatischen Kraft zwischen der ersten und der zweiten Elektrode (12) befestigt ist.

2. Verformbare Spiegelvorrichtung nach Anspruch 1, wobei der Aktor (2) dafür ausgestaltet ist, Verformungen auf die zweite Elektrode (12) und von dort über die erste Elektrode (11) auf die reflektierende Schicht (1) zu übertragen.

3. Verformbare Spiegelvorrichtung nach Anspruch 1 oder 2, wobei der Aktor (2) mit der reflektierenden Schicht über eine elektrische Feldregion zwischen der ersten und der zweiten Elektrode (11, 12) gekoppelt ist.

4. Verformbare Spiegelvorrichtung nach einem der vorhergehenden Ansprüche, wobei die elektrisch isolierende Schicht (13) an der reflektierenden Schicht (1) befestigt ist.

5. Verformbare Spiegelvorrichtung nach einem der Ansprüche 1-3, wobei die elektrisch isolierende Schicht (13) an der zweiten Elektrode (12) befestigt ist.

6. Verformbare Spiegelvorrichtung nach einem der vorhergehenden Ansprüche, wobei eine Trägerschicht (13') an der reflektierenden Schicht (1) befestigt ist und eine zweite Trägerschicht (13") an der zweiten Elektrode (12) befestigt ist, wobei mindestens eine der Schichten (13', 13") elektrisch isolierend ist.

7. Verformbare Spiegelvorrichtung nach einem der vorhergehenden Ansprüche, wobei die erste Elektrode (14) und die zweite Elektrode (15) in einer pipolaren oder einer multipolaren Geometrie zueinander angeordnet sind.

8. Verformbare Spiegelvorrichtung nach Anspruch 6 oder 7, wobei die erste Trägerschicht (13') eine höhere mechanische Steifigkeit auf weist als die zweite Trägerschicht (13").

9. Verformbare Spiegelvorrichtung nach Anspruch 8, wobei die Trägerschicht (13") eine Glasschicht ist, vorzugsweise ein Borsilicat oder gehärtetes Natronkalk, und die Trennschicht (13") eine Kunststoffschicht ist, vorzugsweise ein Polyimid oder ein Polytetrafluorethen.

10. Verformbare Spiegelvorrichtung nach Anspruch 9, wobei die Trägerschicht (13') eine dicke zwischen 10 Mikrometer und 500 Mikrometer aufweist, vorzugsweise zwischen 50 Mikrometer und 200 Mikrometer, und die Trennschicht (13") eine Dicke zwischen 1 Mikrometer und 200 Mikrometer aufweist, vorzugsweise zwischen 10 Mikrometer und 50 Mikrometer.

11. Verformbares Spiegelsystem, eine verformbare Spiegelvorrichtung nach einem der vorhergehenden Ansprüche umfassend, wobei das System eine Spannungsversorgung zum Anlegen einer Spannung an die Elektroden umfasst.

12. Verfahren zum zeitweiligen Anheften einer entfernbaren verformbaren Spiegelfolie an einem Aktor (2), wobei die Spiegelfolie eine reflektierende Schicht (1) umfasst, umfassend
- Bereitstellen einer ersten Elektrode (11), die die reflektierende Schicht ist,
- Bereitstellen einer zweiten Elektrode (12), die mit dem Aktor gekoppelt ist, wobei die zweite Elektrode (12) derart angeordnet ist, dass sie von der ersten Elektrode (11) elektrisch isoliert ist,
- Anlegen einer Spannungsdifferenz zwischen den Elektroden (11, 12), um eine elektrostatische Adhäsionskraft zwischen der verformbaren Spiegelschicht und dem Aktor (2) bereitzustellen, wodurch die entfernbare verformbare Spiegelfolie (11) durch die elektrostatische Adhäsionskraft an dem Aktor befestigt wird;
- Übertragen von Verformungen, die von dem Aktor (2) erzeugt werden, über die erste und zweite Elektrode (11, 12) auf die verformbare Spiegelschicht, während die elektrostatische Adhäsionskraft zwischen der verformbaren Spiegelschicht und dem Aktor (2) angelegt bleibt.

## Revendications

1. Dispositif de miroir déformable comprenant
- une feuille de miroir comprenant une couche réfléchissante (1) pour réfléchir un rayonnement électromagnétique,
- un actionneur (2) pour déformer la couche réfléchissante essentiellement perpendiculairement à sa surface,
- une base (3) pour supporter l'actionneur, et
- des première et seconde électrodes (11, 12), la première électrode (11) étant la couche réfléchissante (1) ou étant couplée à la couche réfléchissante (1), la seconde électrode étant couplée à l'actionneur (2), les première et seconde électrodes (11, 12) étant disposées l'une par rapport à l'autre de manière électriquement isolée,
- une couche d'isolation électrique (13) située entre la couche réfléchissante (1) et la seconde électrode (12) ;
**caractérisé en ce que**
la feuille de miroir est une feuille de miroir amovible (11), fixée à l'actionneur par serrage dû à une force électrostatique entre les première et seconde électrodes (12).

2. Dispositif de miroir déformable selon la revendication 1, dans lequel l'actionneur (2) est configuré pour transmettre des déformations à la seconde électrode (12) et, depuis celle-ci, à la couche réfléchissante (1) via la première électrode (11).

3. Dispositif de miroir déformable selon la revendication 1 ou 2, dans lequel l'actionneur (2) est couplé à la couche réfléchissante via une région de champ électrique située entre les première et seconde électrodes (11, 12).

4. Dispositif de miroir déformable selon l'une quelconque des revendications précédentes, dans lequel la couche d'isolation électrique (13) est fixée à la couche réfléchissante (1).

5. Dispositif de miroir déformable selon l'une quelconque des revendications 1 à 3, dans lequel la couche d'isolation électrique (13) est fixée à la seconde électrode (12).

6. Dispositif de miroir déformable selon l'une quelconque des revendications précédentes, dans lequel une couche de support (13') est fixée à la couche réfléchissante (1) et une seconde couche de support (13") est fixée à la seconde électrode (12), dans lequel au moins l'une des couches (13', 13") est électriquement isolante.

7. Dispositif de miroir déformable selon l'une quelconque des revendications précédentes, dans lequel la première électrode (14) et la seconde électrode (15) sont agencées l'une par rapport à l'autre selon une géométrie bipolaire ou multipolaire.

8. Dispositif de miroir déformable selon la revendication 6 ou 7, dans lequel la première couche de support (13') présente une rigidité mécanique supérieure à celle de la seconde couche de support (13").

9. Dispositif de miroir déformable selon la revendication 8, dans lequel la couche de support (13') est une couche de verre, de préférence un borosilicate ou une chaux sodée trempée, et la couche de séparation (13") est une couche de matière plastique, de préférence un polyimide ou un poly-tétra-fluor-éthène.

10. Dispositif de miroir déformable selon la revendication 9, dans lequel la couche de support (13') a une épaisseur comprise entre 10 microns et 500 microns, de préférence entre 50 microns et 200 microns, et la couche de séparation (13") a une épaisseur comprise entre 1 micron et 200 microns, de préférence entre 10 microns et 50 microns.

11. Système de miroir déformable comprenant un dispositif de miroir déformable selon l'une quelconque des revendications précédentes, dans lequel le système comprend une source de tension pour appliquer une tension aux électrodes.

12. Procédé de collage temporaire d'une feuille de miroir déformable amovible sur un actionneur (2), la feuille de miroir comprenant une couche réfléchissante (1) comprenant de
- prévoir une première électrode (11) constituant la couche réfléchissante,
- prévoir une seconde électrode (12) couplée à l'actionneur, la seconde électrode (12) étant agencée pour être isolée électriquement de la première électrode (11),
- appliquer une différence de tension entre les électrodes (11, 12) pour établir une force d'adhérence électrostatique entre la feuille de miroir déformable et l'actionneur (2), de sorte que la feuille de miroir déformable amovible (11) est fixée à l'actionneur par la force d'adhérence électrostatique ;
- transmettre des déformations générées par l'actionneur (2) à la feuille de miroir déformable par l'intermédiaire des première et seconde électrodes (11, 12) alors que la force d'adhérence électrostatique est appliquée entre la feuille de miroir déformable et l'actionneur (2).
